# EUROPEAN PATENT APPLICATION

(11) **EP 4 693 602 A1**
(43) Date of publication of application: **11.02.2026**
(21) Application number: 24883855.9
(22) Date of filing: 13.05.2024
(51) Int. Cl.: H01M 10/48

(54) **BATTERY AND ELECTRIC DEVICE**

(30) Priority: 30.10.2023 CN 202322922083 U
(71) Applicant: Contemporary Amperex Technology Co., Limited, Ningde, Fujian 352100 (CN)
(72) Inventor: WU, Kai, Ningde, Fujian 352100 (CN); GU, Mingguang, Ningde, Fujian 352100 (CN); LI, Yao, Ningde, Fujian 352100 (CN); CHEN, Shilong, Ningde, Fujian 352100 (CN)
(74) Representative: Lorenz Seidler Gossel Part. mbB
(86) International application number: PCT/CN2024/092808
(87) International publication number: WO 2025/091842

(57) **Abstract**

This application provides a battery and an electric apparatus. The battery includes a box, a battery cell, and a detection apparatus; the box has a containment cavity; the battery cell is disposed in the containment cavity; the battery cell includes a casing and a pressure relief mechanism; the casing has a first wall; the pressure relief mechanism is disposed on the first wall of the casing; the detection apparatus is disposed in the containment cavity; the detection apparatus is located between the first wall and the box and is configured to detect whether the pressure relief mechanism is activated. For the battery provided by this application, more timely and accurate detection of the activation of the pressure relief mechanism is performed through the detection apparatus, helping to control the battery to take measures such as power cutoff and cooling in a timely manner, thereby facilitating the reduction of further spread of thermal runaway inside the battery and improving reliability of the battery.

## Description

### CROSS-REFERENCE TO RELATED APPLICATIONS

This application claims priority to Chinese Patent Application No. 202322922083.7, filed on October 30, 2023 and entitled "BATTERY AND ELECTRIC APPARATUS", which is incorporated herein by reference in its entirety.

### TECHNICAL FIELD

This application relates to the field of battery technology, and in particular, to a battery and an electric apparatus.

### BACKGROUND

Batteries are widely used in electronic devices, such as mobile phones, notebook computers, electric scooters, electric vehicles, electric airplanes, electric ships, electric toy cars, electric toy ships, electric toy airplanes, electric tools, and the like.

In the development of battery technology, in addition to improving the service performance of batteries, the reliability of batteries is also a factor to be considered. Therefore, how to improve the reliability of batteries is a continuously improving issue in battery technology.

### SUMMARY

Embodiments of this application provide a battery and an electric apparatus, which can improve reliability of a battery cell.

According to a first aspect, this application provides a battery including a box, a battery cell, and a detection apparatus; the box has a containment cavity; the battery cell is disposed in the containment cavity, the battery cell includes a casing and a pressure relief mechanism, the casing has a first wall, and the pressure relief mechanism is disposed on the first wall of the casing; and a detection apparatus, disposed in the containment cavity, where the detection apparatus is located between the first wall and the box and is configured to detect whether the pressure relief mechanism is activated.

The battery provided by this embodiment of this application and the detection apparatus are disposed in the containment cavity of the box, and the detection apparatus is disposed between the first wall and the box. This enables more timely and accurate detection of the activation of the pressure relief mechanism through the detection apparatus, helping to control the battery to take measures such as power cutoff and cooling in a timely manner, thereby facilitating the reduction of further spread of thermal runaway inside the battery and improving reliability of the battery.

In some embodiments, the battery further includes a separation member, the separation member is disposed in the containment cavity and is disposed opposite the first wall, the separation member divides the containment cavity into a first containment cavity and a second containment cavity, the separation member has an opening, the opening enables communication between the first containment cavity and the second containment cavity, the battery cell is accommodated in the first containment cavity, and at least part of the pressure relief mechanism is opposite the opening. This is conducive to reducing the spread of heat from the activation of a pressure relief mechanism of any battery cell to an adjacent battery cell, thereby helping to improve the reliability of the battery. In some embodiments, an orthographic projection of the opening on the first wall covers the pressure relief mechanism, and a periphery of the opening is sealingly connected to the first wall, so that the first containment cavity and the second containment cavity are isolated from each other. The detection apparatus is accommodated in the second containment cavity. This helps to reduce the risk of further spread of battery thermal runaway and improve the sensitivity of the detection apparatus in detecting the activation of the pressure relief mechanism of the battery cell, thereby enabling more timely detection of the activation of the pressure relief mechanism of the battery cell, further improving the reliability of the battery.

In some embodiments, the battery further includes an adhesive layer, and the adhesive layer is disposed around the periphery of the opening and adheres the first wall and the separation member. This achieves isolation between the first containment cavity and the second containment cavity with a simple structure, providing good sealing performance and cost-effectiveness.

In some embodiments, the detection apparatus is connected to the separation member. This helps to improve the structural stability of the detection apparatus and reduce the risk of detection failure of the detection apparatus under a condition that the detection apparatus detects the activation of the pressure relief mechanism of the battery cell.

In some embodiments, the box includes a frame and a shield plate, the shield plate is connected to the frame, the shield plate is disposed on a side of the frame facing the first wall, and the detection apparatus is connected to the shield plate. This helps to further improve the reliability of the battery.

In some embodiments, at least one detection apparatus is disposed opposite the pressure relief mechanism. Disposing at least one detection apparatus opposite to the pressure relief mechanism facilitates more timely and accurate detection of the pressure relief process of the corresponding battery cell, further improving the reliability of the detection apparatus in detecting the activation of the pressure relief mechanism of the battery cell.

In some embodiments, the battery further includes an electrode terminal, the casing further includes a second wall, the second wall is different from the first wall, and the electrode terminal is disposed on the second wall; and the battery further includes a busbar, where the busbar electrically connects electrode terminals of different battery cells. This helps to reduce the risk that gas, liquid, and the like inside the battery cell spray toward the busbar, thereby reducing the risk that the liquid discharged from the battery cell electrically connects to the busbar, reducing the risk of internal short circuit in the battery, thereby improving the reliability of the battery.

In some embodiments, the first wall and the second wall are disposed opposite. Thus, the busbar and the pressure relief mechanism are located on opposite sides of the casing, and when the pressure relief mechanism is activated, the gas, liquid, and the like inside the battery cell flow out in a direction away from the busbar, further reducing the risk that the liquid and the like discharged from the battery cell electrically connect to the busbar and cause internal short circuit in the battery, thereby further improving the reliability of the battery.

In some embodiments, the first wall and the second wall intersect with each other. In this case, under a condition that the pressure relief mechanism is activated, an outflow direction of the gas, liquid, and the like inside the battery cell intersects an extension direction of the busbar, further reducing the risk that the liquid and the like discharged from the battery cell electrically connect to the busbar and cause internal short circuit in the battery, thereby further improving the reliability of the battery.

In some embodiments, the battery includes multiple detection apparatuses, and the multiple detection apparatuses are spaced apart. In this case, under a condition that the pressure relief mechanism of any battery cell is activated, the activation can be detected by the nearest detection apparatus. This facilitates more sensitive and accurate detection of the activation of a pressure relief mechanism of any battery cell inside the battery through the multiple detection apparatuses, further improving the reliability of the battery.

In some embodiments, the detection apparatus includes at least one of a temperature detection element, an air pressure detection element, and a liquid detection element. This facilitates accurate and timely detection of the risk of thermal runaway in the battery.

According to a second aspect, an embodiment of this application provides an electric apparatus, including the battery provided by the above embodiment, where the battery is configured to provide electrical energy.

The electric apparatus provided by this embodiment of this application, with the battery provided by the above embodiment, has the same technical effects. The details are not repeated herein.

### BRIEF DESCRIPTION OF DRAWINGS

To more clearly illustrate the technical solutions of the embodiments of this application, the drawings for the embodiments of this application are briefly described below. It is clear that the drawings described below are only some embodiments of this application, and those of ordinary skill in the art can obtain other drawings based on these drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery module in a battery according to an embodiment of this application;
FIG. 4 is a schematic exploded view of a structure of a battery cell in a battery according to an embodiment of this application;
FIG. 5 is a schematic exploded view of a structure of a battery according to an embodiment of this application;
FIG. 6 is a front view of a battery according to an embodiment of this application;
FIG. 7 is a schematic cross-sectional structural diagram along A-A of FIG. 6;
FIG. 8 is another schematic cross-sectional structural diagram along A-A of FIG. 6;
FIG. 9 is a locally enlarged view of a position B in FIG. 8;
FIG. 10 is another locally enlarged view of the position B in FIG. 8; and
FIG. 11 is still another locally enlarged view of the position B in FIG. 8.

The drawings are not necessarily drawn to scale.

### Description of reference signs:

1. vehicle; 1a. motor; 1b. controller;
10. battery; 11. box; 11a. containment cavity; 111a. first containment cavity; 112a. second containment cavity; 111. first box part; 112. second box part; 113. frame; 114. shield plate; 12. separation member; 12a. opening;
20. battery module;
30. battery cell; 31. casing; 31a. accommodation cavity; 31b. first wall; 31c. second wall; 311. casing body; 312. end cover; 32. electrode assembly; 33. electrode terminal; 34. pressure relief mechanism;
40. detection apparatus; and
50. busbar.

### DESCRIPTION OF EMBODIMENTS

The implementations of this application are further described in detail below with reference to the drawings and embodiments. The detailed description and drawings of the following embodiments are used to exemplarily illustrate the principles of this application but are not intended to limit the scope of this application, in other words, this application is not limited to the described embodiments.

In the description of this application, it should be noted that, unless otherwise stated, "multiple" means two or more; the terms "upper," "lower," "left," "right," "inner," "outer," and the like indicating orientation or positional relationships are only for the convenience of describing this application and simplifying the description, and do not indicate or imply that the referred apparatus or element must have a specific orientation, or be constructed or operated in a specific orientation, and thus cannot be understood as limitations on this application. Additionally, the terms "first," "second," and the like are used for descriptive purposes only and cannot be understood as indication or implication of relative importance. "Vertical" is not strictly vertical but within an allowable error range. "Parallel" is not strictly parallel but within an allowable error range.

Reference to an "embodiment" in this application means that a particular feature, structure, or characteristic described with reference to the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described in this application can be combined with other embodiments.

In the description of this application, it should also be noted that, unless otherwise explicitly specified and limited, the terms "mount," "join," and "connect" should be understood in a broad sense, for example, it may be a fixed connection, a detachable connection, or an integral connection; it may be a direct connection or an indirect connection through an intermediary. For those of ordinary skill in the art, the specific meanings of the above terms in this application can be understood based on specific circumstances.

The term "multiple" appearing in this application refers to two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell, and the embodiments of this application are not limited thereto. The battery cell may be cylindrical, flat, or rectangular, or may be in other shapes, and the embodiments of this application are not limited thereto.

The battery in the embodiments of this application may include one or more battery cells to provide a single physical module with higher voltage and capacity. When there are multiple battery cells, the multiple battery cells are connected in series, parallel, or series-parallel through a busbar component.

In some embodiments, the battery may be a battery module; and when there are multiple battery cells, the multiple battery cells are arranged and fastened to form a battery module.

In some embodiments, the battery may be a battery pack, the battery pack includes a box and a battery cell, and the battery cell or battery module is accommodated in the box.

In some embodiments, the box may be part of a chassis structure of a vehicle. For example, a part of the box may form at least part of the floor of the vehicle, or a part of the box may form at least part of a cross beam and longitudinal beam of the vehicle.

In some embodiments, the battery may be an energy storage apparatus. The energy storage apparatus includes an energy storage container, an energy storage cabinet, and the like.

A battery cell usually includes an electrode assembly. The electrode assembly includes a positive electrode, a negative electrode, and a separator. In charge and discharge processes of the battery cell, active ions (for example, lithium ions) intercalate and deintercalate back and forth between the positive electrode and the negative electrode. The separator is disposed between the positive electrode and the negative electrode, to prevent short circuit between the positive electrode and negative electrode while allowing active ions to pass through.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two opposite surfaces in a thickness direction, and the positive electrode active material is disposed on either or both of the two opposite surfaces of the positive electrode current collector.

As an example, the positive electrode current collector may be a metal foil or a composite current collector. For example, as a metal foil, stainless steel on which silver surface treatment is performed, copper, aluminum, nickel, carbon electrode, carbon, nickel, or titanium may be used. The composite current collector may include a polymer material base layer and a metal layer. The composite current collector may be formed by forming a metal material (aluminum, aluminum alloy, nickel, nickel alloy, titanium, titanium alloy, silver, silver alloy, and the like) on a polymer material substrate (for example, polypropylene, polyethylene terephthalate, polybutylene terephthalate, polystyrene, polyethylene, and the like).

As an example, the positive electrode active material may include at least one of the following materials: lithium-containing phosphate, lithium transition metal oxide, and their respective modified compounds. However, this application is not limited to these materials, and other conventional materials that can be used as positive electrode active materials for batteries may also be used. These positive electrode active materials may be used alone or in combination of two or more.

In some embodiments, the positive electrode may be made of foam carbon or foam metal. The foam metal may be foam nickel, foam copper, foam aluminum, or foam alloy. When foam metal is used as the positive electrode, the surface of the foam metal may not be provided with a positive electrode active material, or a positive electrode active material may be provided. As an example, lithium source material, potassium metal, or sodium metal may be filled or deposited in the foam metal, and the lithium source material is lithium metal and/or lithium-rich material.

In some embodiments, the negative electrode may be a negative electrode plate, and the negative electrode plate may include a negative electrode current collector.

As an example, the negative electrode current collector may be a metal foil or a composite current collector. For example, as a metal foil, stainless steel on which silver surface treatment is performed, copper, aluminum, nickel, carbon electrode, carbon, nickel, or titanium may be used. The composite current collector may include a polymer material base layer and a metal layer. The composite current collector may be formed by forming a metal material (aluminum, aluminum alloy, nickel, nickel alloy, titanium, titanium alloy, silver, silver alloy, and the like) on a polymer material substrate (for example, polypropylene, polyethylene terephthalate, polybutylene terephthalate, polystyrene, polyethylene, and the like).

As an example, the negative electrode plate may include a negative electrode current collector and a negative electrode active material disposed on at least one surface of the negative electrode current collector.

As an example, the negative electrode current collector has two opposite surfaces in a thickness direction, and the negative electrode active material is disposed on either or both of the two opposite surfaces of the negative electrode current collector.

As an example, the negative electrode active material may be negative electrode active materials for battery cells known in the art. As an example, the negative electrode active material may include at least one of the following materials: artificial graphite, natural graphite, soft carbon, hard carbon, a silicon-based material, a tin-based material, and lithium titanate.

In some embodiments, the negative electrode may be made of foam carbon or foam metal. The foam metal may be foam nickel, foam copper, foam aluminum, or foam alloy. When foam metal is used as the negative electrode plate, the surface of the foam metal may not be provided with a negative electrode active material, or a negative electrode active material may be provided.

As an example, lithium source material, potassium metal, or sodium metal may be filled or deposited in the negative electrode current collector, and the lithium source material is lithium metal and/or lithium-rich material.

In some embodiments, the material of the positive electrode current collector may be aluminum, and the material of the negative electrode current collector may be copper.

In some embodiments, the electrode assembly further includes a separator, and the separator is disposed between the positive electrode and the negative electrode. A type of the separator is not particularly limited in this application, and any well-known porous-structure separator with good chemical and mechanical stability may be used.

As an example, the main material of the separator may be selected from at least one of glass fiber, non-woven fabric, polyethylene, polypropylene, polyvinylidene fluoride, and ceramic.

In some embodiments, the battery cell further includes an electrolyte, and the electrolyte conducts ions between the positive electrode and negative electrode. A type of electrolyte is not particularly limited in this application, and can be selected according to needs. The electrolyte may be liquid, gel, or solid.

In some embodiments, the electrode assembly is a wound structure. The positive electrode plate and the negative electrode plate are wound into a wound structure.

In some embodiments, the electrode assembly is a stacked structure.

Multiple positive electrode plates and multiple negative electrode plates may be provided, and the multiple positive electrode plates and the multiple negative electrode plates are alternately stacked.

As an example, multiple positive electrode plates may be provided, and the negative electrode plate is folded to form multiple stacked folding segments, with a positive electrode plate sandwiched between adjacent folding segments.

As an example, both the positive electrode plate and the negative electrode plate are folded to form multiple stacked folding segments.

As an example, multiple separators may be provided, separately disposed between any adjacent positive electrode plate or negative electrode plate.

As an example, the separators may be continuously disposed, arranged between any adjacent positive electrode plate or negative electrode plate through folding or winding.

In some embodiments, a shape of the electrode assembly may be cylindrical, flat, or polyhedral.

In some embodiments, the electrode assembly is provided with tabs, and the tabs can conduct current from the electrode assembly. The tabs include a positive tab and a negative tab.

The battery cell further includes a casing, and an accommodation cavity for accommodating the electrode assembly is formed inside the casing. The casing can protect the electrode assembly from the outside to prevent external object from affecting charge or discharge of the electrode assembly.

In the related art, during the operation of a battery, when the battery cell of the battery experiences abnormal temperature or other conditions, a pressure relief mechanism of the battery cell is activated. At this time, it is necessary to promptly detect the pressure relief of the battery cell to control the battery to stop operating and take corresponding cooling measures to reduce the risk of further spread of thermal runaway. However, in the related art, when some battery cells in the battery experience thermal runaway, the relevant control system in the battery cannot detect thermal runaway in time, making it impossible to take corresponding measures in a timely manner, resulting in further spread of thermal runaway. This severely affects the reliability of the battery.

In view of this, an embodiment of this application provides a technical solution that a detection apparatus and a battery cell are disposed in a containment cavity of a box and the detection apparatus is disposed between a first wall and the box, to enable more sensitive and rapid detection of the risk of thermal runaway of the battery cell through the detection apparatus, thereby helping to improve reliability of the battery.

The technical solutions described in the embodiments of this application are applicable to batteries and electric apparatuses using batteries.

The electric apparatus may be a vehicle, mobile phone, portable device, notebook computer, ship, spacecraft, electric toy, electric tool, or the like. The vehicle may be a fuel vehicle, gas vehicle, or new energy vehicle, and the new energy vehicle may be a pure electric vehicle, a hybrid vehicle, or an extended-range vehicle; the spacecraft includes an airplane, a rocket, a space shuttle, and a spaceship; the electric toy includes fixed or mobile electric toys, such as a game console, an electric car toy, an electric ship toy, and an electric airplane toy; the electric tool includes an electric metal cutting tool, an electric grinding tool, an electric assembly tool, and an electric railway tool, such as an electric drill, an electric grinder, an electric wrench, an electric screwdriver, an electric hammer, an impact drill, a concrete vibrator, and an electric planer. The above electric apparatuses are not particularly limited in the embodiments of this application.

For convenience of description, the following embodiments are described by using an example in which the electric apparatus is a vehicle.

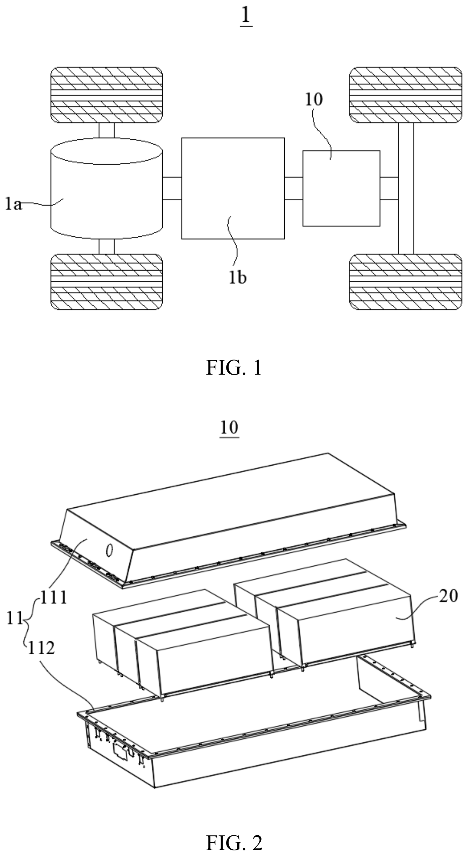

As shown in FIG. 1, a battery 10 is disposed inside the vehicle 1. The battery 10 may be disposed at the bottom, head, or tail of the vehicle 1. The battery 10 may be used for powering the vehicle 1, for example, the battery 10 may serve as an operating power source of the vehicle 1.

The vehicle 1 may further include a controller 1b and a motor 1a. The controller 1b is used to control the battery 10 to supply power to the motor 1a, for example, to satisfy power requirements of starting, navigating, and driving the vehicle 1.

In some embodiments of this application, the battery 10 can serve as the operating power source of the vehicle 1 and as a driving power source of the vehicle 1, completely or partially replacing fuel or natural gas to provide driving power for the vehicle 1.

Refer to FIG. 2. The battery 10 includes a battery cell (not shown in FIG. 2). The battery 10 may further include a box for accommodating the battery cell.

The box 11 is used to accommodate the battery cell, and the box 11 may be in various structural forms. In some embodiments, the box 11 may include a first box part 111 and a second box part 112. The first box part 111 and the second box part 112 are mutually engaged. The first box part 111 and the second box part 112 together define an accommodation space for accommodating the battery cell. The second box part 112 may be a hollow structure with one end open, the first box part 111 may be a plate-like structure, and the first box part 111 covers an open side of the second box part 112 to form a box 11 with an accommodation space; the first box part 111 and the second box part 112 may both be a hollow structure with one side open. An open side of the first box part 111 covers the open side of the second box part 112 to form a box 11 with an accommodation space. Certainly, the first box part 111 and the second box part 112 may be in various shapes, for example, may be cylindrical, rectangular, or the like.

To improve sealing performance after the connection of the first box part 111 and the second box part 112, a sealing member, such as sealant or a sealing ring, may be provided between the first box part 111 and the second box part 112.

It is assumed that the first box part 111 covers the second box part 112, the first box part 111 may also be referred to as the upper box cover, and the second box part 112 may also be referred to as a lower box 11.

In the battery 10, there may be one or more battery cells. If there are multiple battery cells, multiple battery cells may be connected in series, parallel, or series-parallel. A series-parallel connection refers to a mix of series and parallel connections among the multiple battery cells. The multiple battery cells may be directly connected in series, parallel, or series-parallel, and an entirety formed by the multiple battery cells is accommodated in the box 11. Alternatively, the multiple battery cells may first be connected in series, parallel, or series-parallel to form a battery module 20. Multiple battery modules 20 are then connected in series, parallel, or series-parallel to form an entirety accommodated in the box 11.

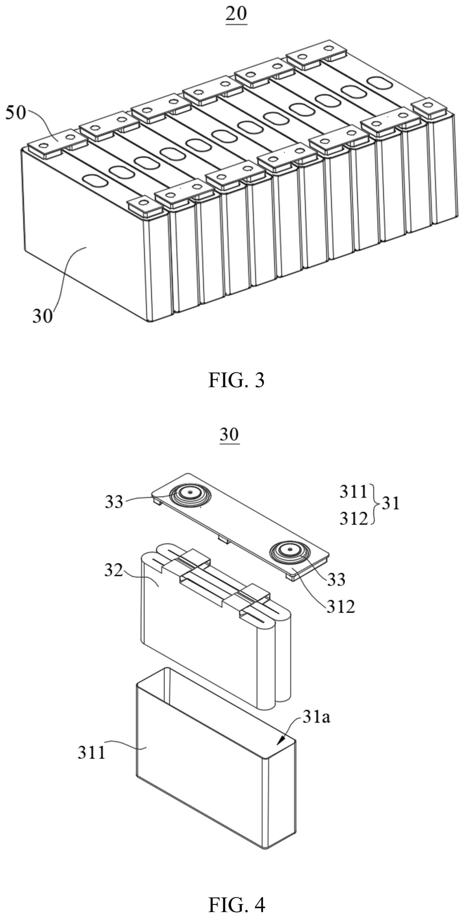

As shown in FIG. 3, in some embodiments, in the battery module 20, there are multiple battery cells 30. The multiple battery cells 30 are first connected in series, parallel, or series-parallel to form a battery module 20. Multiple battery modules 20 are then connected in series, parallel, or series-parallel to form an entirety accommodated in the box 11.

In some embodiments, the multiple battery cells 30 in the battery module 20 may be electrically connected through a busbar 50 to achieve a parallel, series, or series-parallel connection of the multiple battery cells 30 in the battery module 20.

The battery 10 may alternatively not include a box, but include multiple battery cells connected in series or parallel. The multiple battery cells connected in series or parallel are fastened by structures such as steel straps or ties, and then multiple batteries 10 are connected in series or parallel to form a new energy storage unit.

In some embodiments, the multiple battery cells in the battery 10 may be electrically connected through a busbar 50 to achieve parallel, series, or series-parallel of the multiple battery cells in the battery 10.

Refer to FIG. 4. The battery cell 30 provided in this embodiment of this application includes an electrode assembly 32 and a casing 31, the casing 31 has an accommodation cavity 31a, and the electrode assembly 32 is accommodated in the accommodation cavity 31a.

The casing 31 may include a casing body 311 and an end cover 312. To assemble the battery cell 30, the electrode assembly 32 may first be placed in the accommodation cavity 31a, then the end cover 312 covers the casing body 311, and then an electrolyte is injected into the accommodation cavity 31a through an electrolyte injection port on the end cover 312.

In some embodiments, the casing 31 may further be used to accommodate an electrolyte, such as an electrolyte. The casing 31 may be in various structural forms.

The casing 31 may be in various shapes, for example, may be cylindrical or rectangular. The shape of the casing 31 may be determined based on a specific shape of the electrode assembly 32. For example, if the electrode assembly 32 is a cylindrical structure, the casing 31 may be a cylindrical structure. If the electrode assembly 32 is a rectangular structure, the casing 31 may be a rectangular structure. In FIG. 4, for example, both the casing and the electrode assembly 32 are rectangular structures.

Various materials may be used for the casing 31, such as copper, iron, aluminum, stainless steel, aluminum alloy, and the like. This is not particularly limited in the embodiments of this application.

One or more electrode assemblies 32 may be accommodated in the casing 31. In FIG. 4, there are two electrode assemblies 32 accommodated in the casing 31.

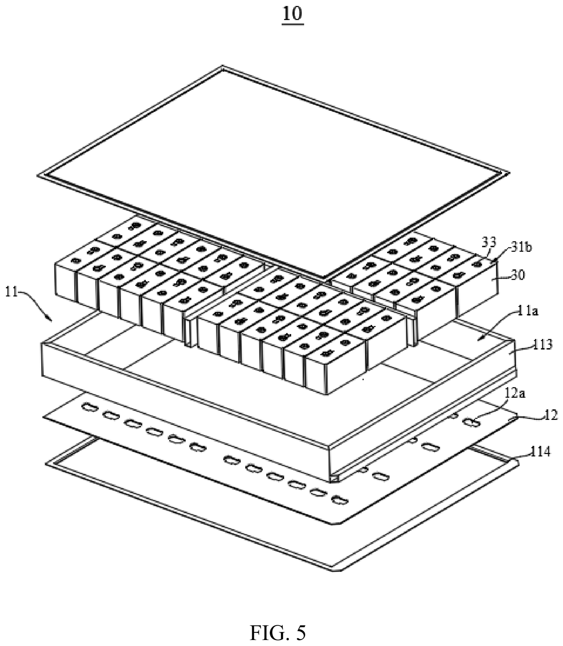

As shown in FIG. 4 to FIG. 7, the battery 10 provided by these embodiments of this application includes the box 11, the battery cell 30, and a detection apparatus 40. The box 11 has a containment cavity 11a, the battery cell 30 is disposed in the containment cavity 11a, the battery cell 30 includes a casing 31 and a pressure relief mechanism 34, the casing 31 has a first wall 31b, and the pressure relief mechanism 34 is disposed on the first wall 31b of the casing 31. The detection apparatus 40 is disposed in the containment cavity 11a. The detection apparatus 40 is located between the first wall 31b and the box 11, and is configured to detect whether the pressure relief mechanism 34 is activated.

The casing 31 may include a casing body 311 and an end cover 312. The casing body 311 and the end cover 312 are mutually engaged to form the accommodation cavity 31a for accommodating the electrode assembly. The first wall 31b may be one side wall of the casing body 311, or the first wall 31b may be one side wall of the end cover 312. In other words, the pressure relief mechanism 34 may be disposed on any side wall of the casing body 311, or the pressure relief mechanism 34 may be disposed on the end cover 312.

The pressure relief mechanism 34 may be an explosion-proof valve, which is activated to relieve pressure when an air pressure inside the casing 31 reaches a preset air pressure threshold, so that gas inside the battery cell 30 can flow out through the pressure relief mechanism 34, thereby reducing an internal pressure of the battery cell 30. This helps to reduce the risk of explosion of the battery cell 30 due to an excessively high internal pressure.

It can be understood that when the pressure relief mechanism 34 is activated, the internal gas flows out and exits through an accommodation space between the first wall 31b and the box 11. Since the detection apparatus 40 is disposed between the first wall 31b and the box 11, the detection apparatus 40 can accurately detect the pressure relief of the battery cell 30 in the pressure relief process of the battery cell 30 in a timely manner. This enables timely power cutoff of the battery 10, thereby reducing the risk of thermal runaway of the battery 10.

Optionally, when the pressure relief mechanism 34 is activated, the gas inside the battery cell 30 flows out, and the electrolyte inside the battery cell 30 may flows out along with the gas outflow, and when the pressure relief mechanism 34 is activated, an internal temperature of the battery cell 30 may rise. Therefore, the detection apparatus 40 can detect the activation of the pressure relief mechanism 34 by detecting any one or more of an airflow, temperature, and liquid in the surrounding environment, so that the relevant control system can determine the activation of the pressure relief mechanism 34 of the battery cell 30 in a timely manner. Therefore, the detection apparatus 40 may include any one of an air pressure detection element, a temperature detection element, and a liquid detection element.

The detection apparatus 40 may be electrically connected to the battery 10 management system of the battery 10, so that when detecting the activation of the pressure relief mechanism 34, the detection apparatus 40 can transmit a relevant signal to the battery 10 management system in a timely manner. In this case, the battery 10 management system controls power cutoff of the battery 10 in a timely manner and performs operations such as cooling the battery cell 30 based on the received signal indicating the activation of the pressure relief mechanism 34 of the battery cell 30 sent by the detection apparatus 40, reducing the risk of further spread of thermal runaway inside the battery 10.

The detection apparatus 40 is located between the first wall 31b and the box 11, and then the detection apparatus 40 may be connected to the box 11. Alternatively, an isolation structure is disposed between the first wall 31b and the box 11, and the detection apparatus 40 may be disposed between the isolation structure and the first wall 31b, or the detection apparatus 40 may be disposed between the isolation structure and the box 11. In this case, the detection apparatus 40 may be connected to the box 11, or the detection apparatus 40 may be connected to the isolation structure.

For the battery 10 provided by these embodiments of this application, the detection apparatus 40 and the battery 10 are disposed in the containment cavity 11a of the box 11, and the detection apparatus 40 is disposed between the first wall 31b and the box 11, enables more timely and accurate detection of the activation of the pressure relief mechanism 34 through the detection apparatus 40. This helps to control the battery 10 to take measures such as power cutoff and cooling in a timely manner, thereby facilitating the reduction of further spread of thermal runaway inside the battery 10 and improving the reliability of the battery 10.

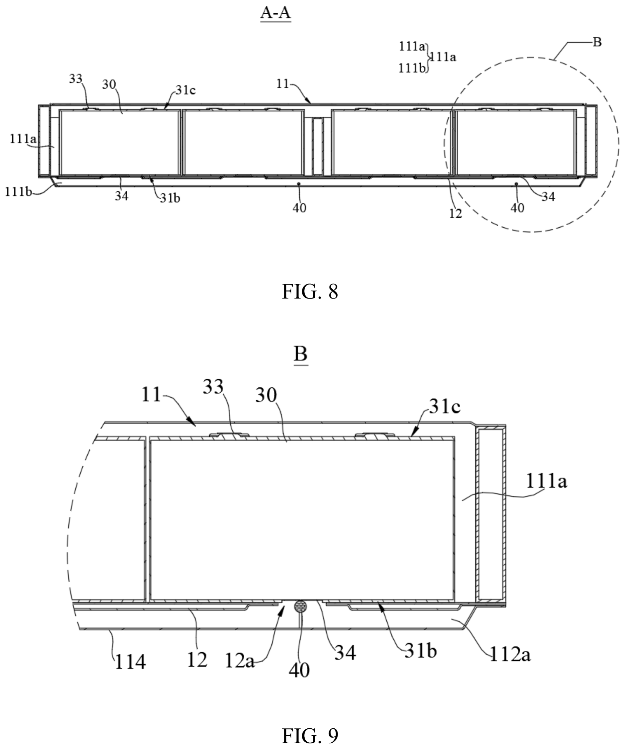

As shown in FIG. 8, in some embodiments, the battery 10 further includes a separation member 12; the separation member 12 is disposed in the containment cavity 11a and is disposed opposite the first wall 31b; the separation member 12 divides the containment cavity 11a into a first containment cavity 111a and a second containment cavity 112a; the separation member 12 has an opening 12a, where the opening 12a enables communication of the first containment cavity 111a and the second containment cavity 112a; the battery cell 30 is accommodated in the first containment cavity 111a; and at least part of the pressure relief mechanism 34 is opposite the opening 12a.

The separation member 12 divides the containment cavity 11a into a first containment cavity 111a and a second containment cavity 112a; the battery cell 30 is accommodated in the first containment cavity 111a; and the pressure relief mechanism 34 may be disposed in the first containment cavity 111a, or the pressure relief mechanism 34 may be disposed in the second containment cavity 112a.

Optionally, the first containment cavity 111a and the second containment cavity 112a may be arranged side by side in the direction of gravity, or the second containment cavity 112a and the first containment cavity 111a may be arranged side by side in a horizontal direction.

At least part of the pressure relief mechanism 34 is opposite the opening 12a. In this case, optionally, the pressure relief mechanism 34 may be completely opposite the opening 12a, or the pressure relief mechanism 34 may be partially opposite the opening 12a.

Since at least part of the pressure relief mechanism 34 is opposite the opening 12a of the separation member 12, under a condition that the pressure relief mechanism 34 is activated, at least part of gas, liquid, and the like inside the battery cell 30 passes through the opening 12a into the second containment cavity 112a, thus collecting the gas, liquid, and the like during the pressure relief of the battery cell 30 in the second containment cavity 112a isolated from the first containment cavity 111a where the battery cell 30 is located, or flows out of the battery 10 through the second containment cavity 112a, helping to reduce the spread of heat from an activated pressure relief mechanism 34 of any battery cell 30 to an adjacent battery cell 30, thereby helping to improve the reliability of the battery 10.

As shown in FIG. 8 and FIG. 9, in some embodiments, an orthographic projection of the opening 12a on the first wall 31b covers the pressure relief mechanism 34; a periphery of the opening 12a is sealingly connected to the first wall 31b, so that the first containment cavity 111a and the second containment cavity 112a are isolated from each other; and the detection apparatus 40 is accommodated in the second containment cavity 112a.

The periphery of the opening 12a is sealingly connected to the first wall 31b, so that the battery cell 30 can block the opening 12a of the separation member 12, thereby isolating the first containment cavity 111a and the second containment cavity 112a from each other. It should be noted that the isolation of the first containment cavity 111a and the second containment cavity 112a means that the first containment cavity 111a and the second containment cavity 112a are isolated from each other and sealed, and therefore gas and the like inside them cannot circulate between them.

An orthographic projection of the opening 12a on the first wall 31b covers the pressure relief mechanism 34, so that when the pressure relief mechanism 34 is activated, all the gas, liquid, and the like flowing out through the pressure relief mechanism 34 from the battery cell 30 flow into the second containment cavity 112a and are entirely contained in the second containment cavity 112a. This reduces the risk of the spread of thermal runaway within battery 10 caused by contact between liquid or high-temperature and high-pressure gas and another battery cell 30 after thermal runaway occurs in any battery cell 30.

When the pressure relief mechanism 34 of any battery cell 30 is activated, gas, liquid, and the like from the battery cell 30 flow through the opening 12a to the second containment cavity 112a. Disposing the detection apparatus 40 in the second containment cavity 112a helps to improve the sensitivity of the detection apparatus 40 in detecting the activation of the pressure relief mechanism 34 of the battery cell 30, thereby enabling more timely detection of the activation of the pressure relief mechanism 34 of the battery cell 30. This further improves the reliability of the battery 10.

In some embodiments, the battery 10 further includes an adhesive layer, and the adhesive layer is disposed around the periphery of the opening 12a and adhesively connects the first wall 31b and the separation member 12.

In this way, the battery cell 30 can be adhered to the separation member 12, and the adhesive layer is arranged around the opening 12a to achieve a sealed connection between the first wall 31b of the battery cell 30 and the periphery of the opening 12a of the separation member 12, thereby achieving isolation of the first containment cavity 111a and the second containment cavity 112a. The structure is simple, with good sealing performance and cost-effectiveness.

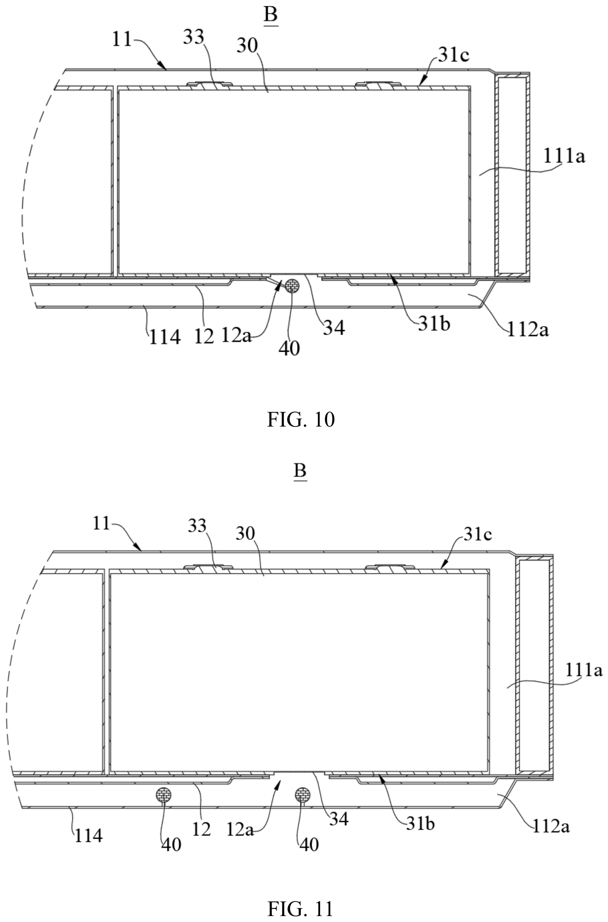

As shown in FIG. 8 and FIG. 10, in some embodiments, the detection apparatus 40 is connected to the separation member 12.

Connecting the detection apparatus 40 to the separation member 12 allows the separation member 12 to bear the weight of the detection apparatus 40, helping to improve the structural stability of the detection apparatus 40 and reduce the risk of detection failure of the detection apparatus 40 under a condition that the detection apparatus 40 detects the activation of the pressure relief mechanism 34 of the battery cell 30.

As shown in FIG. 8, FIG. 9, and FIG. 11, in some embodiments, the box 11 includes a frame 113 and a shield plate 114, the shield plate 114 is connected to the frame 113, the shield plate 114 is disposed on a side of the frame 113 facing the first wall 31b, and the detection apparatus 40 is connected to the shield plate 114.

The second containment cavity 112a may be located below the first containment cavity 111a in the direction of gravity. Connecting the detection apparatus 40 to the shield plate 114 helps to improve the structural stability of the detection apparatus 40, thereby improving the reliability of the detection apparatus 40 in detecting the activation of the pressure relief mechanism 34 of the battery cell 30, further improving the reliability of the battery 10.

As shown in FIG. 8, FIG. 10, and FIG. 11, in some embodiments, at least one detection apparatus 40 is disposed opposite the pressure relief mechanism 34.

Optionally, one detection apparatus 40 may be provided in one battery 10, or multiple detection apparatuses 40 may be provided in one battery 10. This can be determined according to actual needs.

At least one detection apparatus 40 is disposed opposite the pressure relief mechanism 34, and then the at least one detection apparatus 40 may be disposed opposite a pressure relief mechanism 34 of any battery cell 30.

When the pressure relief mechanism 34 of any battery cell 30 is activated, the internal high-temperature and high-pressure gas flows out through the pressure relief mechanism 34, and as the gas flows, a flow rate and temperature of the gas decrease. Therefore, a closer distance between the detection apparatus 40 and the pressure relief mechanism 34 means more timely detection of the pressure relief from the pressure relief mechanism 34 of the battery cell 30.

Therefore, disposing at least one detection apparatus 40 opposite the pressure relief mechanism 34 facilitates more timely and accurate detection of the pressure relief process of the corresponding battery cell 30, further improving the reliability of the detection apparatus 40 in detecting the activation of the pressure relief mechanism 34 of the battery cell 30.

As shown in FIG. 3, FIG. 6, FIG. 7, and FIG. 8, in some embodiments, the battery 10 further includes an electrode terminal 33, the casing 31 further includes a second wall 31c, the second wall 31c is different from the first wall 31b, and the electrode terminal 33 is disposed on the second wall 31c. The battery 10 further includes a busbar 50, where the busbar 50 electrically connects electrode terminals 33 of different battery cells 30.

The second wall 31c is different from the first wall 31b, and optionally, the second wall 31c may intersect the first wall 31b, or the second wall 31c may be disposed opposite the first wall 31b.

The electrode terminal 33 is disposed on the second wall 31c, and the busbar 50 electrically connects electrode terminals 33 of different battery cells 30 to achieve series or parallel connection of different battery cells 30.

The disposition of the second wall 31c is different from that of the first wall 31b, and therefore the busbar 50 is located on a different side of the battery cell 30 from the pressure relief mechanism 34. In this way, under a condition that thermal runaway occurs in the battery cell 30, the gas, liquid, and the like inside the battery cell 30 flow out through the pressure relief mechanism 34, helping to reduce the risk that the gas, liquid, and the like inside the battery cell 30 spray toward the busbar 50, thereby reducing the risk that the liquid discharged from the battery cell 30 electrically connects to the busbar 50. This reducing the risk of internal short circuit in the battery 10, thereby improving the reliability of the battery 10.

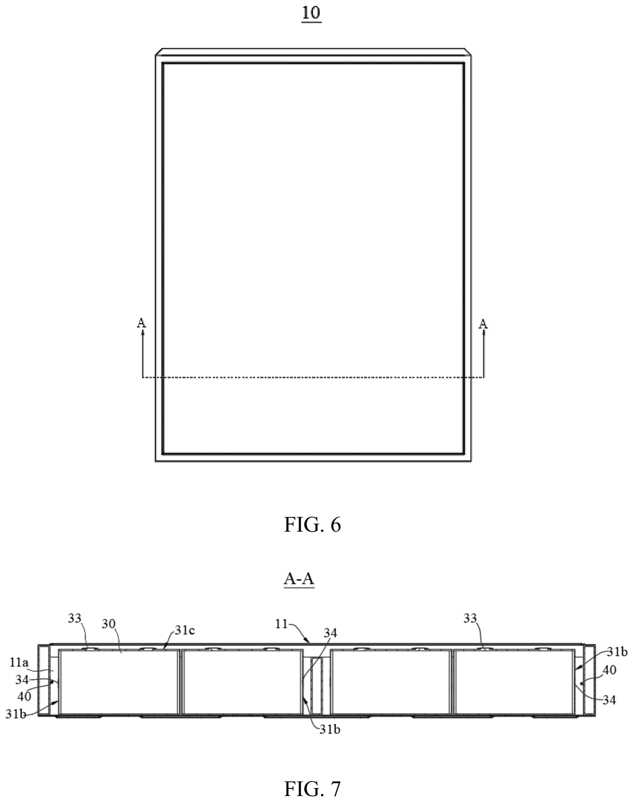

As shown in FIG. 6 and FIG. 8, in some embodiments, the first wall 31b and the second wall 31c are disposed opposite each other.

Thus, the busbar 50 and the pressure relief mechanism 34 are located on opposite sides of the casing 31, and when the pressure relief mechanism 34 is activated, the gas, liquid, and the like inside the battery cell 30 flow out in a direction away from the busbar 50, further reducing the risk that the liquid and the like discharged from the battery cell 30 electrically connect to the busbar 50 and cause internal short circuit in the battery 10, thereby further improving the reliability of the battery 10.

As shown in FIG. 6 and FIG. 7, in some embodiments, the first wall 31b and the second wall 31c intersect with each other.

Under a condition that the first wall 31b and the second wall 31c intersect with each other, and the pressure relief mechanism 34 is activated, an outflow direction of the gas, liquid, and the like inside the battery cell 30 intersects an extension direction of the busbar 50, further reducing the risk that the liquid and the like discharged from the battery cell 30 electrically connect to the busbar 50 and cause internal short circuit in the battery 10, thereby further improving the reliability of the battery 10.

As shown in FIG. 8 and FIG. 11, in some embodiments, the battery 10 includes multiple detection apparatuses 40, and the multiple detection apparatuses 40 are spaced apart.

The battery 10 includes multiple detection apparatuses 40, and optionally, the battery 10 may include two, three, or more detection apparatuses 40. For example, a quantity of detection apparatuses 40 in the battery 10 is equal to a quantity of battery cells 30, so that the detection apparatuses 40 are in one-to-one correspondence with the battery cells 30, and when the pressure relief mechanism 34 of any battery cell 30 is activated, the activation can be detected by a correspondingpressure relief mechanism 34.

In this case, the battery 10 includes multiple detection apparatuses 40, and the multiple detection apparatuses 40 are spaced apart. Under a condition that the pressure relief mechanism 34 of any battery cell 30 is activated, the activation can be detected by the nearest detection apparatus 40. This facilitates more sensitive and accurate detection of the activation of a pressure relief mechanism 34 of any battery cell 30 inside the battery 10 through the multiple detection apparatuses 40, further improving the reliability of the battery 10.

In some embodiments, the detection apparatus 40 includes at least one of a temperature detection element, an air pressure detection element, and a liquid detection element.

Optionally, the temperature detection element may be a temperature sensor, the air pressure detection element may be an air pressure sensor, and the liquid detection element may be a liquid sensor.

The detection apparatus 40 may include only one of the temperature detection element, the air pressure detection element, and the liquid detection element, or the detection element may include multiple elements of the temperature detection element, the air pressure detection element, and the liquid detection element. The temperature detection element, the air pressure detection element, and the liquid detection element may be separately provided, or any two or all of the temperature detection element, the air pressure detection element, and the liquid detection element may be integrated into one unit.

Under a condition that the detection apparatus 40 includes the temperature detection element, the air pressure detection element, and the liquid detection element, and the pressure relief mechanism 34 of the battery cell 30 is activated, the gas and liquid inside the battery cell 30 flowing out and passing through the detection apparatus 40 cause changes in a pressure, temperature, or the like of the detection apparatus 40, and when the detection apparatus 40 detects changes in pressure or temperature, the detection apparatus 40 can determine the activation of the pressure relief mechanism 34 of any battery cell 30 inside the battery 10, facilitating accurate and timely detection of the risk of thermal runaway in the battery 10.

The electric apparatus provided by these embodiments of this application includes the battery 10 provided by any of the above embodiments, and the battery 10 is configured to provide electrical energy.

The electric apparatus provided by these embodiments of this application, with the battery 10 provided by any of the above embodiments, has the same technical effects. The details are not repeated herein.

As shown in FIG. 4 to FIG. 11, in some embodiments, the battery 10 provided by the embodiments of this application includes the box 11, the battery cell 30, the busbar 50, the detection apparatus 40, and the separation member 12. The box 11 has the containment cavity 11a. The battery cell 30, the detection apparatus 40, and the separation member 12 are disposed in the containment cavity 11a. The separation member 12 divides the containment cavity 11a into a first containment cavity 111a and a second containment cavity 112a. The battery cell 30 is accommodated in the first containment cavity 111a. The detection apparatus 40 is accommodated in the second containment cavity 112a. The battery cell 30 includes a casing 31, an electrode terminal 33, and a pressure relief mechanism 34. The casing 31 has a first wall 31b and a second wall 31c. The first wall 31b and the second wall 31c are disposed opposite each other. The pressure relief mechanism 34 is disposed on the first wall 31b. The electrode terminal 33 is disposed on the second wall 31c. The separation member 12 has an opening 12a, where the opening 12a enables communication between the first containment cavity 111a and the second containment cavity 112a. At least part of the pressure relief mechanism 34 is disposed opposite the opening 12a. The busbar 50 electrically connects the electrode terminals 33 of different battery cells 30. The detection apparatus 40 is disposed opposite the pressure relief mechanism 34.

For the battery 10 provided by these embodiments of this application, the detection apparatus 40 and the battery 10 are disposed in the containment cavity 11a of the box 11, and the detection apparatus 40 is disposed between the first wall 31b and the box 11. This enables more timely and accurate detection of the activation of the pressure relief mechanism 34 through the detection apparatus 40, helping to control the battery 10 to take measures such as power cutoff and cooling in a timely manner, thereby facilitating the reduction of further spread of thermal runaway inside the battery 10 and improving the reliability of the battery 10.

Although this application is described with reference to preferred embodiments, various improvements can be made and the components can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A battery, comprising:
a box, having a containment cavity;
a battery cell, disposed in the containment cavity, wherein the battery cell comprises a casing and a pressure relief mechanism, the casing has a first wall, and the pressure relief mechanism is disposed on the first wall of the casing; and
a detection apparatus, disposed in the containment cavity, wherein the detection apparatus is located between the first wall and the box and is configured to detect whether the pressure relief mechanism is activated.

2. The battery according to claim 1, wherein the battery further comprises a separation member, the separation member is disposed in the containment cavity and is disposed opposite the first wall, the separation member divides the containment cavity into a first containment cavity and a second containment cavity, the separation member has an opening, the opening enables communication between the first containment cavity and the second containment cavity, the battery cell is accommodated in the first containment cavity, and at least part of the pressure relief mechanism is opposite the opening.

3. The battery according to claim 2, wherein an orthographic projection of the opening on the first wall covers the pressure relief mechanism; a periphery of the opening is sealingly connected to the first wall, so that the first containment cavity and the second containment cavity are isolated from each other; and the detection apparatus is accommodated in the second containment cavity.

4. The battery according to claim 3, wherein the battery further comprises an adhesive layer, and the adhesive layer is disposed around the periphery of the opening and adheres the first wall and the separation member.

5. The battery according to any one of claims 2 to 4, wherein the detection apparatus is connected to the separation member.

6. The battery according to any one of claims 1 to 5, wherein the box comprises a frame and a shield plate, the shield plate is connected to the frame, the shield plate is disposed on a side of the frame facing the first wall, and the detection apparatus is connected to the shield plate.

7. The battery according to any one of claims 1 to 6, wherein at least one detection apparatus is disposed opposite the pressure relief mechanism.

8. The battery according to any one of claims 1 to 7, wherein the battery further comprises an electrode terminal, the casing further comprises a second wall, the second wall is different from the first wall, and the electrode terminal is disposed on the second wall; and
the battery further comprises a busbar, wherein the busbar electrically connects electrode terminals of different battery cells.

9. The battery according to claim 8, wherein the first wall and the second wall are disposed opposite each other.

10. The battery according to claim 8, wherein the first wall and the second wall intersect with each other.

11. The battery according to any one of claims 1 to 10, wherein the battery comprises multiple detection apparatuses, and the multiple detection apparatuses are spaced apart.

12. The battery according to any one of claims 1 to 11, wherein the detection apparatus comprises at least one of a temperature detection element, an air pressure detection element, and a liquid detection element.

13. An electric apparatus, comprising the battery according to any one of claims 1 to 12, wherein the battery is configured to provide electrical energy.
